(19) Europäisches Patentamt
European Patent Office
Office européen des brevets

(11) Veröffentlichungsnummer : **0 484 451 B1**

(12) **EUROPÄISCHE PATENTSCHRIFT**

(45) Veröffentlichungstag der Patentschrift :
**15.06.94 Patentblatt 94/24**

(51) Int. Cl.$^5$ : **C09D 5/44,** C08G 18/32

(21) Anmeldenummer : **90912670.8**

(22) Anmeldetag : **20.07.90**

(86) Internationale Anmeldenummer :
**PCT/EP90/01189**

(87) Internationale Veröffentlichungsnummer :
**WO 91/02035 21.02.91 Gazette 91/05**

# (54) VERFAHREN ZUM BESCHICHTEN ELEKTRISCH LEITFÄHIGER SUBSTRATE, WÄSSRIGER LACK, VERFAHREN ZUR HERSTELLUNG EINES URETHANGRUPPENHALTIGEN ADDUKTES UND URETHANGRUPPENHALTIGES ADDUKT.

(30) Priorität : **26.07.89 DE 3924694**

(43) Veröffentlichungstag der Anmeldung :
**13.05.92 Patentblatt 92/20**

(45) Bekanntmachung des Hinweises auf die Patenterteilung :
**15.06.94 Patentblatt 94/24**

(84) Benannte Vertragsstaaten :
**AT BE CH DE DK ES FR GB IT LI NL SE**

(56) Entgegenhaltungen :
**EP-A- 0 262 069**
**EP-A- 0 279 198**

(73) Patentinhaber : **BASF Lacke + Farben AG**
**Glasuritstrasse 1**
**D-48165 Münster-Hiltrup (DE)**

(72) Erfinder : **SANTURE, David, J.**
**43650 Nine Mile Road**
**Novi,Michigan 48375 (US)**
Erfinder : **OTT, Günther**
**Von-Holte-Strasse 101a**
**D-4400 Münster (DE)**
Erfinder : **REITER, Udo**
**Regerstrasse 22**
**D-4404 Telgte (DE)**
Erfinder : **HEIMANN, Ulrich**
**Schlagholz 28**
**D-4400 Münster (DE)**
Erfinder : **OSLOWSKI, Hans-Josef**
**Heinrichstrasse 5**
**D-4400 Münster (DE)**

(74) Vertreter : **Münch, Volker, Dr. et al**
**BASF Lacke + Farben AG**
**Patente/Lizenzen/Dokumentation**
**Postfach 61 23**
**D-48136 Münster (DE)**

**EP 0 484 451 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zum Beschichten elektrisch leitfähiger Substrate, bei dem

(1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird.

Die Erfindung betrifft auch einen wäßrigen Lack, ein Verfahren zur Herstellung eines urethangruppenhaltigen Adduktes und ein urethangruppenhaltiges Addukt.

Das oben beschriebene kathodische Elektrotauchlackierverfahren ist bekannt (vgl. z.B. DE-OS-35 18 732, DE-OS-35 18 770, EP-A-4090, EP-A-12 463 und EP-A-262 069) und wird insbesondere zur Grundierung von Automobilkarosserien eingesetzt.

Mit Hilfe des kathodischen Elektrotauchlackierverfahrens können - insbesondere bei Verwendung von Elektrotauchlacken, die kationische, aminomodifizierte Epoxidharze als Bindemittel enthalten - qualitativ hervorragende Lackierungen erhalten werden.

In der EP-A-262 069 wird offenbart, daß durch Zusatz von urethangruppenhaltigen Addukten zu Elektrotauchlacken die Flexibilität, Stoßelastizität und Steinschlagfestigkeit der erhaltenen Lackierungen verbessert werden kann. Die Zugabe der in der EP-A-262 069 offenbarten urethangruppenhaltigen Addukte führt aber nachteiligerweise zur Herabsetzung der Lösemittelbeständigkeit der eingebrannten Filme und zur Verringerung der Lagerstabilität der Elektrotauchlacke. Weiter wirkt sich der Zusatz der in der EP-A-262 069 offenbarten urethangruppenhaltigen Addukte auch negativ auf die Korrosionsschutzeigenschaften der erhaltenen Lackierungen aus.

Die der vorliegenden Erfindung zugrundeliegenden Aufgabenstellung besteht in der Bereitstellung eines neuen Verfahrens gemäß Oberbegriff des Patentanspruchs 1, mit dem Lackierungen erhalten werden können, die die oben beschriebenen Nachteile des Standes der Technik nicht bzw. in vermindertem Ausmaß aufweisen.

Diese Aufgabe wird überraschenderweise durch ein Verfahren gemäß Oberbegriff des Patentanspruchs 1 gelöst, bei dem der wäßrige Elektrotauchlack ein kationisches, aminmodifiziertes Epoxidharz und ein zumindest teilweise protoniertes, urethangruppenhaltiges Addukt enthält, das erhältlich ist, indem

(A) ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen

(B) ein Polyisocyanat oder ein Gemisch aus Polyisocyanaten und

(C) eine Verbindung, die eine Hydroxylgruppe und mindestens eine Ketimingruppe im Molekül enthält oder ein Gemisch aus solchen Verbindungen

miteinander umgesetzt werden und die nach Hydrolyse der Ketimingruppen entstandenen primären Aminogruppen zumindest teilweise protoniert werden, wobei das Addukt erhältlich ist, indem die Komponenten (A), (B) und (C) in einem solchen Mengenverhältnis miteinander umgesetzt werden, daß auf ein Äquivalent Isocyanatgruppen 0,75 bis 1,5 Äquivalente Hydroxylgruppen kommen.

Die nach dem erfindungsgemäßen Verfahren hergestellten Lackierungen sind im Vergleich zu den nach der EP-A-262 069 hergestellten Lackierungen in Hinsicht auf die Lösemittelbeständigkeit, Korrosionsschutzeigenschaften, Flexibilität, Stoßelastizität, Steinschlagfestigkeit und Haftung zum Substrat überlegen. Außerdem zeigen Elektrotauchlacke, die die erfindungsgemäß eingesetzten urethangruppenhaltigen Addukte enthalten, eine bessere Lagerstabilität als Elektrotauchlacke, die die in der EP-A- 262 069 offenbarten urethangruppenhaltigen Addukte enthalten.

Die erfindungsgemäß eingesetzten Elektrotauchlacke enthalten mindestens ein kathodisch abscheidbares, kationisches, aminmodifiziertes Epoxidharz, ggf. mindestens ein Vernetzungsmittel und Pigmente, Füllstoffe, mindestens ein Reibharz und sonstige allgemein gut bekannte Zusätze, wie Entschäumungsmittel, Verlaufshilfsmittel usw.

Die erfindungsgemäß eingesetzten Elektrotauchlacke können prinzipiell alle für die Herstellung von Elektrotauchlacken geeigneten kathodisch abscheidbaren fremd- oder selbstvernetzenden, kationischen, aminmodifizierten Epoxidharze enthalten. Die erfindungsgemäß eingesetzten Elektrotauchlacke können auch Mischungen unterschiedlicher kathodisch abscheidbarer Kunstharze enthalten.

Die Elektrotauchlacke enthalten kationische, aminomodifizierte Epoxidharze als kathodisch abscheidbare Kunstharze. Es sind sowohl selbst- als auch fremdvernetzende kationische aminmodifizierte Epoxidharze bekannt. Bevorzugt werden fremdvernetzende kationische, aminmodifizierte Epoxidharze eingesetzt.

Unter kationischen, aminmodifizierten Epoxidharzen werden kationische Reaktionsprodukte aus

(a) ggf. modifizierten Polyepoxiden und

(b) Aminen

verstanden.

Unter Polyepoxiden werden Verbindungen verstanden, die zwei oder mehr Epoxidgruppen im Molekül enthalten.

Besonders bevorzugte (a)-Komponenten sind Verbindungen, die herstellbar sind durch Umsetzung von

(i) einer Diepoxidverbindung oder eines Gemisches von Diepoxidverbindungen mit einem Epoxidäquivalentgewicht unter 2000 mit

(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C, gegebenenfalls in Anwesenheit eines Katalysators durchgeführt wird (vgl. DE-OS-35 18 770).

Weitere besonders bevorzugte (a)-Komponenten sind Verbindungen, die herstellbar sind durch eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Polyepoxide, die zur Herstellung der besonders bevorzugten (a)-Komponenten und auch selbst als (a)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4′-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)2,2propan.

Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen, wie Diethylamin oder Ethylhexylamin oder Diamine mit sekundären Aminogruppen, z.B. N,N′-Dialkylalkylendiamine, wie Dimethylethylendiamin, N,N′-Dialkyl-polyoxialkylenamine, wie N,N′-dimethylpolyoxipropylendiamin, cyanalkylierte Alkylendiamine, wie Bis-N,N′-Cyanethylethylendiamin, cyanalkylierte Polyoxialkylenamine, wie Bis-N,N′-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, spiziell Glycidylester $\alpha$-verzweigter Fettsäuren, wie der Versaticsäure, oder

c) hydroxylgruppenhaltige Verbindungen, wie Neopentylglykol, Bis-ethoxiliertes Neopentylglykol, Hydroxipivalinsäureneopentylglykolester, DimethylhydantoinN,N′-diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte

oder

d) gesättigte oder ungesättigte Fettsäuremethylester, die in Gegenwart von Natriummethylat mit Hydroxylgruppen der Epoxidharze umgeestert werden.

Als Komponente (b) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (b)-Komponenten eingesetzt.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, bevorzugt Essigsäure) erzeugt werden.

Eine weitere Möglichkeit zur Einführung kationischer Gruppen in die Komponente (a) besteht in der Umsetzung von Epoxidgruppen der Komponente (a) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppen pro Molekül besitzt und dessen blockierte Isocyanatgruppen erst bei erhöhten Temperaturen entblockt werden, umgesetzt wird.

Bevorzugte Elektrotauchlacke werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel $R^1$-0-C0- enthalten.

Der Rest $R^1$ bedeutet:

$R^1$ = $R^2$0-C0-$CH_2$-, $R^3$-CHOH-$CH_2$, $R^4$-CHOR$^5$-CHOH-$CH_2$-

$R^2$ = Alkyl

$R^3$ = H, Alkyl, $R^6$-O-$CH_2$ oder $R^6$-CO-O-$CH_2$-

$R^4$ = H oder Alkyl

$R^5$ = H, Alkyl oder Aryl

$R^6$ = Alkyl, Cycloalkyl oder Aryl

Bevorzugte Elektrotauchlacke werden erhalten, wenn als Vernetzungsmittel blockierte Polyisocyanate eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Es ist erfindungswesentlich, daß bei dem in Rede stehenden Verfahren ein Elektrotauchlack eingesetzt wird, der ein kationisches, aminmodifiziertes Epoxidharz und zumindest teilweise protonisiertes, urethangruppenhaltiges Addukt enthält, das erhältlich ist, indem

(A) ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen

(B) ein Polyisocyanat oder ein Gemisch aus Polyisocyanaten und

(C) eine Verbindung, die eine Hydroxylgruppe und mindestens eine Ketimingruppe im Molekül enthält oder ein Gemisch aus solchen Verbindungen

miteinander umgesetzt werden und die nach Hydrolyse der Ketimingruppen entstandenen primären Aminogruppen zumindest teilweise protoniert werden, wobei das Addukt erhältlich ist, indem die Komponenten (A), (B) und (C) in einem solchen Mengenverhältnis miteinander umgesetzt werden, daß auf ein Äquivalent Isocyanatgruppen 0,75 bis 1,5 Äquivalente Hydroxylgruppen kommen.

Die Umsetzung der Komponenten (A), (B) und (C) kann sowohl in Substanz als auch in einem gegenüber Isocyanatgruppen inerten Lösemittel oder Lösemittelgemisch, gegebenenfalls bei erhöhten Temperaturen, vorzugsweise bei 40 bis 100°C, durchgeführt werden. Die Umsetzung kann durch Zugabe von Katalysatoren, wie z.B. Dibutylzinndilaurat katalysiert werden.

Die Komponenten werden in einem solchen Mengenverhältnis miteinander umgesetzt, daß auf ein Äquivalent Isocyanatgruppen 0,75 bis 1,5, vorzugsweise 0,9 bis 1,1, besonders bevorzugt 1,0 Äquivalente Hydroxylgruppen kommen. Wenn als Komponente (A) ein Polyether- oder Polyesterdiol und als Komponente (B) ein Diisocyanat eingesetzt wird, dann werden vorzugsweise n Mol der Komponente (A), n + 1 Mol der Komponente (B) und 2 Mol der Komponente (C) miteinander umgesetzt.

Es ist bevorzugt, als Komponente (A) ein Polyether- oder Polyesterdiol oder ein Gemisch aus Polyether- und/oder Poly- esterdiolen und als Komponente (B) ein Diisocyanat oder ein Gemisch aus Diisocyanaten einzusetzen. Es können auch höher funktionelle Polyether- und/oder Polyesterpolyole und/oder Polyisocyanate eingesetzt werden. In solchen Fällen ist aber dafür Sorge zu tragen - z.B. durch Zumischung von monofunktionellen Reaktionspartnern - daß es nicht zu einer Gelierung der Reaktionsmischung kommt.

Für die Reihenfolge, in der die Komponenten (A), (B) und (C) umgesetzt werden können, gibt es mehrere Möglichkeiten: So kann z.B. in einer ersten Stufe aus den Komponenten (A) und (B) ein endständige Isocyanatgruppen aufweisendes Präpolymer hergestellt werden, dessen Isocyanatgruppen dann in einer zweiten Stufe mit der Komponente (C) umgesetzt werden. Es ist aber auch möglich, die Komponenten (A) und (C) vorzulegen und die Komponente (B) langsam zuzugeben. Eine dritte, weniger bevorzugte Variante besteht darin, daß in einer ersten Stufe aus den Komponenten (B) und (C) ein isocyanatgruppenhaltiges Vorprodukt hergestellt wird, das dann in einer zweiten Stufe mit der Komponente (A) umgesetzt wird.

Das nach Umsetzung der Komponenten (A), (B) und (C) erhaltene Produkt wird hydrolysiert und die dabei entstandenen primären Aminogruppen zumindest teilweise protoniert. Das geschieht zweckmäßigerweise durch Zugabe von Wasser und Säure zu dem aus (A), (B) und (C) erhaltenen Reaktionsprodukt. Die so erhaltene wäßrige Dispersion kann dann in den wäßrigen Elektrotauchlack inkorporiert werden. Es ist selbstverständlich auch möglich, das aus (A), (B) und (C) hergestellte Reaktionsprodukt zusammen mit dem oben beschriebenen kathodisch abscheidbaren Kunstharz in Gegenwart einer Säure in Wasser zu dispergieren und die so erhaltene Dispersion zu einem wäßrigen Elektrotauchlack weiterzuverarbeiten. Weiterhin ist es möglich, das aus (A), (B) und (C) erhaltene Reaktionsprodukt zur wäßrigen Dispersion des oben beschriebenen kathodisch abscheidbaren Kunstharzes bzw. zum fertigen wäßrigen Elektrotauchlack zu geben. Das aus (A), (B) und (C) erhaltene Reaktionsprodukt wird in der wäßrigen Dispersion bzw. im wäßrigen Elektrotauchlack hydrolysiert und von der in der Dispersion bzw. im Elektrotauchlack vorhandenen Säure protoniert. In manchen Fällen kann es erforderlich sein, der Dispersion bzw. dem Elektrotauchlack noch etwas Säure zuzugeben.

Als Komponente (A) wird ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen eingesetzt. Als Komponente (A) wird vorzugsweise ein Polyether- oder Polyesterdiol mit einem zahlenmittleren Molekulargewicht von 400 bis 5000, vorzugsweise 600 bis 2000 oder ein Gemisch aus solchen Polyether- und/oder Polyesterdiolen eingesetzt. Besonders bevorzugt werden Polyetherdiole mit einem zahlenmittleren Molekulargewicht von 400 bis 5000, vorzugsweise 600 bis 2000 als Komponente (A) eingesetzt.

Als Beispiele für geeignete Polyetherpolyole werden aliphatische Polyetherdiole der allgemeinen Formel $H-(0(CHR)_n-)_mOH$ genannt. R = Wasserstoff oder ein niedriger Alkylrest, n = 2 bis 6, bevorzugt 3 bis 4 und m = 2 bis 100, bevorzugt 5 bis 50. Es können lineare oder verzweigte Polyetherpolyole, wie Poly(ethylenoxid), Poly(propylenoxid), Poly(butylenoxid) und/oder durch Copolymerisation von Ethylenoxid mit Propylenoxid erhältliche Polyetherpolyole als Komponente (A) eingesetzt werden.

Besonders bevorzugt werden Poly(propylenoxid) und Copolymere aus Ethylenoxid und Propylenoxid mit einem zahlenmittleren Molekulargewicht von 600 bis 2000 als Komponente (A) eingesetzt.

Es können selbstverständlich auch Mischungen aus unterschiedlichen Polyetherpolyolen als (A)-Komponente eingesetzt werden.

Es können auch Polyesterpolyole, insbesondere Polyesterdiole mit einem zahlenmittleren Molekulargewicht von 400 bis 5000, vorzugsweise 600 bis 2000, als Komponente (A) eingesetzt werden.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen , wie Dimethylolcyclohexan. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigten Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppe und wiederkehrende Polyesteranteile der Formel $(-CO-(CHR)_n-CH_2-0-)$ aus. Hierbei ist n bevorzugt 4 bis 6 und der Substituent R Wasserstoff, ein Alkyl-, Cycloalkyl- oder Alkoxy-Rest. Kein Substituent enthält mehr als 12 Kohlenstoffatome. Als Beispiele werden genannt Poly(hydroxycapronsäure), Poly(hydroxybuttersäure), Poly(hydroxydecansäure) und Poly(hydroxystearinsäure). Das als Ausgangsmaterial verwendete Lacton kann durch die folgende allgemeine Formel dargestellt werden

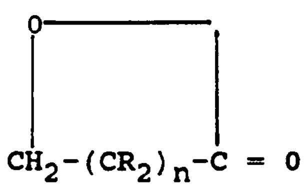

in der n und R die bereits angegebene Bedeutung haben. Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole, wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als Komponente (B) können aliphatische, cycloaliphatische und/oder aromatische Polyisocyanate mit mindestens zwei Isocyanatgruppen pro Molekül eingesetzt werden. Als Komponente (B) werden vorzugsweise Diisocyanate eingesetzt. Als aromatische Diisocyanate eignen sich Phenylendiisocyanat, Toluylendiisocyanat, Xylylendiisocyanat, Biphenylendiisocyanat, Naphtylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat sowie die Hydrierungsprodukte der aromatischen Diisocyanate, wie Cyclohexylendiisocyanat, Methylcyclohexylendiisocyanat und Dicyclohexylmethandiisocyanat. Aliphatische Diisocyanate sind Verbindungen der Formel $OCN-(CR_2)_r-NCO$, worin r eine ganze Zahl von 2 bis 20, insbesondere 6 bis 8 ist und R, das gleich oder verschieden sein kann, Wasserstoff oder einen niedrigen Alkylrest

mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Es können selbstverständlich auch Mischungen aus unterschiedlichen Polyisocyanaten eingesetzt werden.

Als Komponente (C) werden Verbindungen, die eine Hydroxylgruppe und mindestens eine Ketimingruppe im Molekül enthalten, eingesetzt. Diese Verbindungen können nach allgemein gut bekannten Methoden durch Umsetzung von Verbindungen, die eine Hydroxylgruppe und mindestens eine primäre Aminogruppe im Molekül enthalten, mit Ketonen erhalten werden. Als Beispiele für Verbindungen, die eine Hydroxylgruppe und mindestens eine primäre Aminogruppe im Molekül enthalten, werden Verbindungen der allgemeinen Formel $H_2N-CR_1R_2-R_3-0(CHR_4-CHR_5-0)_nH$ genannt. In dieser Formel stehen $R_1$ und $R_2$ für Wasserstoff, Alkyl- oder $-CH_2OH$-Gruppen, $R_3$ steht für einen linearen oder verzweigten Alkylenrest, insbesondere für einen Alkylenrest mit 1 bis 3 Kohlenstoffatomen, $R_4$ und $R_5$ stehen für Wasserstoff oder Alkylreste mit 1 bis 4 Kohlenstoffatomen und n = 0 - 5. Als Beispiele für einsetzbare Verbindungen, die eine Hydroxylgruppe und mindestens eine primäre Aminogruppe im Molekül enthalten, werden konkret genannt: Ethanolamin, Propanolamin, Butanolamin, 2-Amino-2-methylpropanol-1 ($H_2N-C(CH_3)_2-CH_2OH$), 2 Amino-2-ethylpropanol-1 und ethoxyliertes und/oder propoxyliertes Ethanolamin oder Propanolamin, wie z.B. 2,2'Aminoethoxyethanol ($H_2N-CH_2-CH_2-0-CH_2-CH_2-OH$) und Diethylenglykolmono(3-aminopropyl)ether ($H_2N-(CH_2)_3-0-CH_2-CH_2-0-CH_2-CH_2-OH$).

Es können auch Aminophenole eingesetzt werden. Diese sind jedoch weniger bevorzugt. Die primären Aminogruppen der Verbindungen, die eine Hydroxylgruppe und mindestens eine primäre Aminogruppe im Molekül enthalten, werden nach allgemein gut bekannten Methoden (vgl. z.B. DE-OS-35 19 953) mit Ketonen in Ketimingruppen überführt. Als Ketone können z.B. eingesetzt werden: Aceton, Methylethylketon, Diethylketon, Methylpropylketon, Methylisopropylketon, Methyl-n-butylketon, Methylisobutylketon, Ethylisopropylketon, Cyclohexanon, Cyclopentanon, Acetophenon. Besonders bevorzugte Ketone sind Aceton, Methylethylketon und Methylisobutylketon. Die auf diese Weise erhaltenen Verbindungen mit einer Hydroxylgruppe und mindestens einer Ketimingruppe im Molekül können dann als Komponente (C) zur Herstellung der erfindungsgemäß eingesetzten, urethangruppenhaltigen Addukte eingesetzt werden.

Die erfindungsgemäß eingesetzten urethangruppenhaltigen Addukte werden in solchen Mengen in die erfindungsgemäßen Elektrotauchlacke eingearbeitet, daß die Elektrotauchlacke 1 bis 45 Gew.-%, vorzugsweise 1 bis 25 Gew.-%, bezogen auf die im Elektrotauchlack enthaltene Gesamtmenge an kathodisch abscheidbarem Kunstharz und - falls vorhanden - Vernetzungsmittel und Reibharz, des urethangruppenhaltigen Adduktes enthalten.

Es können selbstverständlich auch Mischungen aus urethangruppenhaltigen Addukten in den Elektrotauchlacken eingesetzt werden.

Die erfindungsgemäß eingesetzten Elektrotauchlacke werden nach allgemein gut bekannten Methoden hergestellt. Die Synthese der kathodisch abscheidbaren Kunstharze erfolgt nach gut bekannten Methoden (vgl. z.B. DE-OS-35 18 732, DE-OS-35 18 770, EP-A-4090 und EP-A-12463) in organischen Lösemitteln. Die so erhaltenen Kunstharzlösungen bzw. -dispersionen werden in neutralisierter Form in eine wäßrige Phase überführt.

Pigmente werden in Form einer Pigmentpaste in die wäßrige Dispersion der kathodisch abscheidbaren Harze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydradisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß der fertige Elektrotauchlack die für die Abscheidung erforderlichen Eigenschaften aufweist. In den meisten Fällen beträgt das Gewichtsverhältnis zwischen Pigment und kathodisch abscheidbarem Kunstharz 0,05 bis 0,5.

Die erfindungsgemäß eingesetzten Elektrotauchlacke können neben dem kathodisch abscheidbaren Kunstharz, der Pigmentpaste und dem urethangruppenhaltigen Addukt noch weitere übliche Zusatzstoffe enthalten, wie z.B. Zusatzlösemittel, Antioxidantien, oberflächenaktive Mittel usw.

Der Festkörper der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 4 und 8, vorzugsweise zwischen 5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/$m^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die erfindungsgemäßen wäßrigen Lacke können auch durch Spritzen, Streichen, Rakeln usw. sowohl auf elektrisch leitende als auch auf elektrisch nichtleitende Substrate aufgebracht werden.

Die Erfindung wird in den folgenden Beispiele näher erläutert. Alle Angaben über Teile und Prozentsätze sind Gewichtsangaben, falls nicht ausdrücklich etwas anderes festgestellt wird.

## 1. Herstellung von urethangruppenhaltigen Addukten

1.1 Herstellung von Verbindungen, die eine Hydroxylgruppe und mindestens eine Ketimingruppe im Molekül enthalten.

1.1.1 Ketimin I

In einem geeigneten Reaktor mit Rührer, Inertgaseinleitung, Wasserabscheider und Rückflußkühler werden 1.100 g 2.2′-Aminoethoxyethanol ($H_2N-CH_2-CH_2-O-CH_2-CH_2-OH$) und 1.886 g Methylisobutylketon (MIBK) vorgelegt und unter Stickstoff auf 110°C aufgeheizt. Man kreist das erste Reaktionswasser aus und steigert die Temperatur in kleinen Schritten auf 140°C und hält bei dieser Temperatur, bis 189 g Wasser ausgekreist sind. Man kühlt auf 40°C und trägt das Produkt unter Stickstoffatmosphäre aus. Die Lösung weist ein Amin-äquivalent von 265 auf.

1.1.2 Ketimin II

In der unter 1.1.1 beschriebenen Weise werden 836 g Ethanolamin und 2.210 g Methylisobutylketon umgesetzt bis 150 g Wasser ausgekreist sind. Die Lösung hat ein Aminäquivalent von 200.

1.2 Herstellung der Addukte

1.2.1 Addukt I

In einem Reaktionsgefäß werden unter Stickstoffatmosphäre 900 g Pluriol P600[1)] und 265 g Ketimin I auf 60°C aufgeheizt. Man gibt 0,8 g Dibutylzinndilaurat zu und läßt unter Rühren 530,8 g Desmodur W[2)] so zutropfen, daß die Temperatur nicht über 70°C steigt (90 Minuten). Man hält noch für weitere 30 Minuten die Temperatur, bis im IR-Spektrum keine freien Isocyanatgruppen mehr nachweisbar sind. Sodann verdünnt man mit 331 g Methylisobutylketon und trägt das Produkt aus.

1.2.2 Addukt II

In der in 1.2.1 beschriebenen Weise werden nachfolgend aufgeführte Stoffe zur Reaktion gebracht:

| | |
|---|---|
| 344 g | Pluriol P600 |
| 600 g | Voranol P2000[1)] |
| 152 g | Ketimin I |
| 0,7 g | Dibutylzinndilaurat |

[1)] Polypropylenglykol mit Molekulargewicht 600 (Fa. BASF)
[2)] Dicyclohexylmethandiisocyanat, NCO-Äquivalentgewicht 132.7 (Fa. Bayer).
[1)] Polypropylenglykol mit Molekulargewicht 2090 (Fa. DOW Chemical).

| | |
|---|---|
| 305 g | Desmodur W |
| 68 g | Butylglykol |
| 229 g | Methylisobutylketon |

1.2.3 Addukt III

In der in 1.2.1 beschriebenen Weise werden nachfolgend aufgeführte Stoffe zur Reaktion gebracht:

| | |
|---|---|
| 653 g | Voranol P2000 |
| 55 g | Ketimin I |
| 0,4 g | Dibutylzinndilaurat |
| 110 g | Desmodur W |
| 40 g | Butylglykol |
| 145 g | Methylisobutylketon |

1.2.4 Addukt IV

In der in 1.2.1 beschriebenen Weise werden nachfolgend aufgeführte Stoffe zur Reaktion gebracht:

| | |
|---|---|
| 1404 g | Pluriol P900[1)] |
| 310 g | Ketimin I |
| 248 g | Methylisobutylketon |
| 1,1 g | Dibutylzinndilaurat |
| 613 g | Desmodur W |
| 112 g | Butylglykol |
| 113 g | Methylisobutylketon |

1.2.5 Addukt V

In der in 1.2.1 beschriebenen Weise werden nachfolgend aufgeführte Stoffe zur Reaktion gebracht:

| | |
|---|---|
| 851 g | Polycaprolactondiol (OH-Zahl 198) |
| 200 g | Ketimin II |
| 0,7 g | Dibutylzinndilaurat |
| 444 g | Isophorondiisocyanat |
| 302 g | Methylisobutylketon |

## 2. Herstellung erfindungsgemäßer Elektrotauchlacke

2.1 Herstellung eines Bindemittels

In einem Reaktionsgefäß mit Rührer, Rückflußkühler, Innenthermometer und Stickstoffeinlaß werden 1.805 Teile eines flüssigen Epoxidharzes auf Basis Bisphenol A mit einem Epoxidäquivalentgewicht von 188 zusammen mit 352 Teilen Nonylphenol, 67 Teilen Xylol und 10 Teilen Dimethyllaurylamin vorgelegt. Die Reaktionsmischung wird auf 130°C erhitzt und bei dieser Temperatur gehalten, bis das Epoxidäquivalentgewicht einen Wert von 450 erreicht hat. Innerhalb einer Stunde wird eine 71,3%ige Lösung von Ethanolamin-methylisobutylketimin in Methylisobutylketon bei dieser Temperatur zugetropft. Man hält die Reaktion noch weitere 7 Stunden aufrecht, bevor man mit 141 Teilen Hexylglykol auf einen Festkörper von 83,5% (1 Stunde bei 130°C) verdünnt. Das Harz hat einen MEQ-Base-Wert von 1,68 Milliäquivalenten/g Festharz

2.2 Herstellung eines Vernetzungsmittel

Gemäß der DE-OS 27 01 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4-/2,6-Toluylendiisocanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bie 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

2.3 Herstellung wäßriger Bindemitteldispersionen

2.3.1 Dispersion I

898 Teile des nach 2.1 hergestellten Bindemittels werden mit 528 Teilen des nach 2.2 hergestellten

[1)] Polypropylenglykol mit Molekulargewicht 900 (Fa. BASF)

Vernetzungsmittels, 8 Teilen Dibutylzinndilaurat, 1,2 Teilen einer Entschäumerlösung (50%ige Lösung von Surfynol® [Air Products] in Butylglycol), 33,7 Teilen Eisessig und 780 Teilen entionisiertem Wasser intensiv gemischt. Nach 20-minütigem Homogenisieren wird portionsweise mit 1.760 Teilen entionisiertem Wasser verdünnt. Die Dispersion wird anschließend so lange einer Vakuumdestillation unterworfen bis sie einen Feststoffgehalt von 28,5 Gew.-% (60 Minuten, 130°C) aufweist. In 4.500 Teile dieser Dispersion wird eine Mischung aus 178 Teilen Addukt I (vgl. 1.2.1), 8,7 Teilen Eisessig und 232 Teilen entionisiertem Wasser eingerührt.

2.3.2 Dispersion II

Dispersion II wird hergestellt wie Dispersion I. Anstelle von 178 Teilen Addukt I werden 178 Teile Addukt II (vgl. 1.2.2) und anstelle von 8,7 Teilen Eisessig werden 3,0 Teile Eisessig eingesetzt.

2.3.3 Dispersion III

Dispersion III wird hergestellt wie Dispersion I. Anstelle von 178 Teilen Addukt I werden 283,0 Teile Addukt III (vgl. 1.2.3), anstelle von 8,7 Teilen Eisessig werden 2,9 Teile Eisessig und anstelle von 232 Teilen entionisiertem Wasser werden 417,0 Teile entionisiertes Wasser eingesetzt.

2.3.4 Dispersion IV

Dispersion IV wird hergestellt wie Dispersion I. Anstelle von 178 Teilen Addukt I werden 400,8 Teile Addukt IV (vgl. 1.2.4), anstelle von 8,7 Teilen Eisessig werden 5,3 Teile Eisessing und anstelle von 232 Teilen entionisiertem Wasser werden 621,9 Teile entionisiertes Wasser eingesetzt.

2.3.5 Dispersion V

Dispersion V wird hergestellt wie Dispersion I. Anstelle von 178 Teilen Addukt I werden 139,4 Teile Addukt V (vgl. 1.2.5), anstelle von 8,7 Teilen Eisessig werden 2,7 Teile Eisessig und anstelle von 232 Teilen entionisiertem Wasser werden 164,9 Teile entionisiertes Wasser eingesetzt.

2.4 Herstellung einer grauen Pigmentpaste

27,81 Teile Bisphenol-A-diglycidylether, 1,44 Teile Xylol und 5,81 Teile Bisphenol A werden in Gegenwart von 0,002 Teilen Triphenylphosphin bei 150-160°C bis zu einem EEW von 345 umgesetzt. Der Ansatz wird dann mit 21,61 Teilen Butylglykol verdünnt und auf 49°C gekühlt. Dann wird eine Mischung aus 7,77 Teilen 9-Amino-3.6-dioxanonan-1-o1 und 4,07 Teilen N,N-Dimethylaminopropylamin innerhalb 6 min zugegeben, worauf die Temperatur auf 110°C steigt. Man hält die Mischung 1 Std. lang zwischen 110 bus 115°C bevor 6,45 Teile Butylglykol zugegeben werden und der Ansatz auf 77°C gekühlt wird. Anschließend werden 14,9 Teile Nonylphenolglycidylether zugegeben. Die Tempera-tur steigt daraufhin auf 90°C an und wird dort 1 Std. gehalten, bevor mit 10,03 Teilen Butylglykol verdünnt und gekühlt wird. Der Feststoffgehalt der dünnflüssigen Harzlösung liegt bei 60%.

Zur Herstellung der Pigmentpaste werden zunächst 29,33 Teile Wesser, 1,59 Teile Essigsäure (90%ig) und 21,60 Teile der vorstehend beschriebenen Harzlösung vorgemischt. Nun werden 0,7 Teile Entschäumer[1) ], 0,5 Teile Ruß, 4,8 Teile basisches Bleipigment, 6,75 Teile Extender HEWP[2) ], 32,48 Teile Titandioxid (R900) und 2,25 Teile Dibutylzinnoxid zugegeben, und die Mischung wird 30 min lang unter einem schnellaufenden Dissolverrührwerk vordispergiert. Anschließend wird die Mischung in einer Laborkleinmühle (Motor Mini Mill, Eiger Engineering Ltd., Great Britain) während 1 bis 1,5 Std. bis zu einer HegmannFeinheit von kleiner/gleich 12 dispergiert und mit weiterem Wasser auf die gewünschte Verarbeitungsviskosität fein eingestellt.

Es resultiert eine sehr entmischungsstabile Pigmentpaste.

2.5 Herstellung erfindungsgemäßer Elektrotauchlacke und Abscheidungen

In einem geeigneten Gefäß werden 1.800 Teile entionisiertes Wasser vorgelegt und mit 4 Teilen 10%iger Essigsäure versetzt. Hierhinein werden 2.328 Teile der Bindemitteldispersion und 640 Teile der Pigmentpaste eingerührt und mit 228 Teilen entionisiertem Wasser aufgefüllt. Vor den Abscheidungen werden die Lackbäder 10 Tage unter Rühren gealtert.

Die Abscheidung der Lackfilme erfolgt während 2 Minuten bei 270V auf zinkphosphatiertem Blech. Die Filme werden bei 175°C 20 min eingebrannt. Zur Durchführung des 360h ASTM Salzsprühtests erfolgt die Abscheidung bei 250V auf unbehandeltem Stahlblech. Die Abscheideergebnisse sind in der folgenden Tabelle 1 zusammengefaßt.

[1)] "Tristar Antifoam" Tristar Chemical Co., Dallas, USA
[2)] English China Clay Int., Great Britain

**Tabelle 1: Abscheideergebnisse**

| Elektrotauchlack aus Bindemitteldispersion | I | II | III | IV | V | Vergleich[1] |
|---|---|---|---|---|---|---|
| Schichtdicke [µm] | 20 | 22 | 20 | 22 | 21 | 22 |
| MIBK-Test [2] | 0 | 0 | 0 | 0 | 0 | 1 |
| Verlauf [3] | 1,5 | 1,0 | 1,0 | 1,5 | 2 | 2 |
| Reverse Impact (in lb) | 50 | 50 | 60 | 70 | 40 | 10 |
| Biegung am konischen Dorn nach ISO-Norm (in cm) | 2 | 1 | 2 | 1 | 2 | 4 |

1) Wie Elektrotauchlacke I bis V aber ohne urethangruppenhaltiges Addukt
2) 20 Doppelhübe mit einem mit Methylisobutylketon getränkten Wattebausch; 0 = bester Wert; 5 = schlechtester Wert
3) 1 = bester Wert; 5 = schlechtester Wert

## Patentansprüche

1. Verfahren zum Beschichten elektrisch leitfähiger Substrate, bei dem
   (1) das elektrisch leitfähige Substrat in einen wäßrigen Elektrotauchlack getaucht wird

(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird,

dadurch gekennzeichnet, daß der wäßrige Elektrotauchlack ein kationisches, aminmodifiziertes Epoxidharz und ein zumindest teilweise protoniertes, urethangruppenhaltiges Addukt enthält, das ererhältlich ist, indem

(A) ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen
(B) ein Polyisocyanat oder ein Gemisch aus Polyisocyanaten und
(C) eine Verbindung, die eine Hydroxylgruppe und mindestens eine Ketimingruppe im Molekül enthält oder ein Gemisch aus solchen Verbindungen miteinander umgesetzt werden und die nach Hydrolyse der Ketimingruppen entstandenen primären Aminogruppen zumindest teilweise protoniert werden, wobei das Addukt erhältlich ist, indem die Komponenten (A), (B) und (C) in einem solchen Mengenverhältnis miteinander umgesetzt werden, daß auf ein Äquivalent Isocyanatgruppen 0,75 bis 1,5 Äquivalente Hydroxylgruppen kommen.

**2.** Wäßriger Lack, dadurch gekennzeichnet, daß er ein kationisches, aminmodifiziertes Epoxidharz und ein zumindest teilweise protoniertes, urethangruppenhaltiges Addukt enthält, das erhältlich ist, indem

(A) ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen
(B) ein Polyisocyanat oder ein Gemisch aus Polyisocyanaten und
(C) eine Verbindung, die eine Hydroxylgruppe und mindestens eine Ketimingruppe im Molekül enthält oder ein Gemisch aus solchen Verbindungen

miteinander umgesetzt werden und die nach Hydrolyse der Ketimingruppen entstandenen primären Aminogruppen zumindest teilweise protoniert werden, wobei das Addukt erhältlich ist, indem die Komponenten (A), (B) und (C) in einem solchen Mengenverhältnis miteinander umgesetzt werden, daß auf ein Äquivalent Isocyanatgruppen 0,75 bis 1,5 Äquivalente Hydroxylgruppen kommen.

**3.** Verfahren oder Lack nach Anspruch 1 oder 2, dadurch gekennzeichnet, daß das Addukt erhältlich ist, indem als Komponente (A) ein Polyether- oder Polyesterdiol oder ein Gemisch aus Polyether- und/ oder Polyesterdiolen und als Komponente (B) ein Diisocyanat oder ein Gemisch aus Diisocyanaten eingesetzt wird.

**4.** Verfahren oder Lacke nach einem der Ansprüche 1 bis 3, dadurch gekennzeichnet, daß das Addukt erhältlich ist, indem die Komponenten (A), (B) und (C) in einem solchen Mengenverhältnis miteinander umgesetzt werden, daß auf ein Äquivalent Isocyanatgruppen 0,9 bis 1,1, bevorzugt 1,0 Äquivalente Hydroxylgruppen kommen.

**5.** Verfahren zur Herstellung eines urethangruppenhaltigen Adduktes, bei dem

(A) ein Polyether- oder Polyesterpolyol mit einem zahlenmittleren Molekulargewicht von 400 bis 5000, vorzugsweise 600 bis 2000 oder ein Gemisch aus solchen Polyether- und/oder Polyesterpolyolen
(B) ein Polyisocyanat oder ein Gemisch aus Polyisocyanaten und
(C) eine Verbindung, die eine Hydroxylgruppe und mindestens eine Ketimingruppe im Molekül enthält oder ein Gemisch aus solchen Verbindungen

miteinander umgesetzt werden, wobei das Addukt erhältlich ist, indem die Komponenten (A), (B) und (C) in einem solchen Mengenverhältnis miteinander umgesetzt werden, daß auf ein Äquivalent Isocyanatgruppen 0,75 bis 1,5 Äquivalente Hydroxylgruppen kommen.

**6.** Verfahren nach Anspruch 5, dadurch gekennzeichnet, daß als Komponente (A) ein Polyether- oder Polyesterdiol oder ein Gemisch aus Polyether und/oder Polyesterdiolen und als Komponente (B) ein Diisocyanat oder ein Gemisch aus Diisocyanaten eingesetzt wird.

**7.** Verfahren nach Anspruch 5 oder 6, dadurch gekennzeichnet, daß die Komponenten (A), (B) und (C) in einem solchen Mengenverhältnis miteinander umgesetzt werden, daß auf ein Äquivalent Isocyanatgruppen 0,9 bis 1,1, bevorzugt 1,0 Äquivalente Hydroxylgruppen kommen.

**8.** Urethangruppenhaltiges Addukt, dadurch gekennzeichnet, daß es nach einem Verfahren gemäß einem der Ansprüche 5 bis 7 erhöltlich ist.

## Claims

1. Process for coating an electrically conductive substrate in which
   (1) the electrically conductive substrate is dipped into an aqueous electro-dipping primer,
   (2) the substrate is connected as the cathode,
   (3) a film is deposited on the substrate by direct current,
   (4) the coated substrate is removed from the electrodipping primer and
   (5) the film coat deposited is stoved,
   characterized in that the aqueous electro-dipping primer contains a cationic, amine-modified epoxy resin and an at least partly protonated adduct containing urethane groups which is obtainable by reacting with one another
   (A) a polyether- or polyester-polyol having a number-average molecular weight of 400 to 5000, preferably 600 to 2000, or a mixture of such polyether- and/or polyester-polyols,
   (B) a polyisocyanate or a mixture of polyisocyanates and
   (C) a compound which contains a hydroxyl group and at least one ketimine group in the molecule or a mixture of such compounds, and at least partly protonating the primary amino groups formed after hydrolysis of the ketimine groups; the adduct being obtainable by reacting with one another components (A), (B) and (C) in proportions such that 0.75 to 1.5 equivalents of hydroxyl groups are present per equivalent of isocyanate groups.

2. Aqueous coating composition characterized in that it contains a cationic, amine-modified epoxy resin and an at least partly protonated adduct containing urethane groups which is obtainable by reacting with one another
   (A) a polyether- or polyester-polyol having a number-average molecular weight of 400 to 5000, preferably 600 to 2000, or a mixture of such polyether- and/or polyester-polyols,
   (B) a polyisocyanate or a mixture of polyisocyanates and
   (C) a compound which contains a hydroxyl group and at least one ketimine group in the molecule or a mixture of such compounds,
   and at least partly protonating the primary amino groups formed after hydrolysis of the ketimine groups; the adduct being obtainable by reacting with one another components (A), (B) and (C) in proportions such that 0.75 to 1.5 equivalents of hydroxyl groups are present per equivalent of isocyanate groups.

3. Process or coating according to either Claim 1 or 2, characterized in that the adduct is obtainable by employing a polyether- or polyester-diol or a mixture of polyether- and/or polyester-diols as component (A) and a diisocyanate or a mixture of diisocyanates as component (B).

4. Process or coating composition according to any of Claims 1 to 3, characterized in that the adduct is obtainable by reacting with one another components (A), (B) and (C) in proportions such that 0.9 to 1.1 and preferably 1.0 equivalents of hydroxyl groups are present per equivalent of isocyanate groups.

5. Process for the preparation of an adduct containing urethane groups, which comprises reacting with one another
   (A) a polyether- or polyester-polyol having a number-average molecular weight of 400 to 5000, preferably 600 to 2000, or a mixture of such polyether- and/or polyester-polyols,
   (B) a polyisocyanate or a mixture of polyisocyanates and
   (C) a compound which contains a hydroxyl group and at least one ketimine group in the molecule or a mixture of such compounds; the adduct being obtainable by reacting with one another components (A), (B) and (C) in proportions such that 0.75 to 1.5 equivalents of hydroxyl groups are present per equivalent of isocyanate groups.

6. Process according to Claim 5, characterized in that a polyether-or polyester-diol or a mixture of polyether- and/or polyester-diols is employed as component (A) and a diisocyanate or a mixture of diisocyanates is employed diisocyanates is employed as component (B).

7. Process according to either of Claims 5 and 6, characterized in that components (A), (B) and (C) are reacted with one another in proportions such that 0.9 to 1.1 and preferably 1.0 equivalents of hydroxyl groups are present per equivalent of isocyanate groups.

8. Adduct containing urethane groups, characterized in that it is obtainable by a process according to any

of Claims 5 to 7.

## Revendications

1. Procédé de revêtement de substrats électroconducteurs, pour lesquels
   (1) le substrat électroconducteur est trempé dans une laque aqueuse pour trempage électro-phorétique
   (2) le substrat est branché en tant que cathode
   (3) un film est déposé sur le substrat à l'aide d'un courant continu
   (4) le substrat revêtu est retiré de la laque pour trempage électro-phorétique et
   (5) le film de laque déposé est soumis à cuisson,
   caractérisé en ce que la laque aqueuse pour trempage électro-phorétique contient une résine époxy cationique modifiée aux amines et un additif au moins partiellement protoné, renfermant des groupes uréthanes, que l'on peut obtenir en faisant réagir ensemble
   (A) un polyétherpolyol ou un polyesterpolyol à poids moléculaire moyen au nombre de 400 à 5000, de préférence de 600 à 2000 ou un mélange de tels polyétherpolyols et/ou polyesterpolyols,
   (B) un polyisocyanate ou un mélange de polyisocyanates et
   (C) un composé, qui contient dans la molécule un groupe hydroxyle et au moins un groupe cétimine ou un mélange de tels composés et
   qui sont protonés au moins partiellement après hydrolyse des groupes amino primaires résultant des groupes cétimines, l'additif pouvant être obtenu en ce que les composants (A), (B), et (C) réagissent ensemble dans un rapport des ingrédients tel qu'à un équivalent en groupes isocyanates correspondent 0,75 à 1,5 équivalents en groupes hydroxyles.

2. Laque aqueuse, caractérisée en ce qu'elle contient une résine époxy cationique modifiée aux amines et un additif au moins partiellement protoné, renfermant des groupes uréthanes, que l'on peut obtenir en faisant réagir ensemble
   (A) un polyétherpolyol ou un polyesterpolyol à poids moléculaire moyen au nombre de 400 à 5000, de préférence de 600 à 2000 ou un mélange de tels polyétherpolyols et/ou polyesterpolyols,
   (B) un polyisocyanate ou un mélange de polyisocyanates et
   (C) un composé, qui contient dans la molécule un groupe hydroxyle et au moins un groupe cétimine ou un mélange de tels composés et
   qui sont protonés au moins partiellement après hydrolyse des groupes amino primaires résultant des groupes cétimines, l'additif pouvant être obtenu en ce que les composants (A), (B), et (C) réagissent ensemble dans un rapport des ingrédients tel qu'à un équivalent en groupes isocyanates correspondent 0,75 à 1,5 équivalents en groupes hydroxyles.

3. Procédé ou laque selon la revendication 1 ou 2, caractérisé en ce que l'on peut obtenir l'additif en utilisant en tant que composant (A) un polyétherdiol ou un polyesterdiol ou un mélange de polyétherdiols et/ou de polyesterdiols et en tant que composant (B) un diisocyanate ou un mélange de diisocyanates.

4. Procédé ou laque selon l'une quelconque des revendications 1 à 3, caractérisé en ce que l'on peut obtenir l'additif en faisant réagir les composants (A), (B) et (C) dans un rapport des ingrédients tel qu'à un équivalent en groupes isocyanates correspondent 0,9 à 1,1, de préférence 1,0 équivalents en groupes hydroxyles.

5. Procédé de fabrication d'un additif renfermant des groupes uréthanes, pour lequel l'on fait réagir ensemble
   (A) un polyétherpolyol ou un polyesterpolyol à poids moléculaire moyen au nombre de 400 à 5000, de préférence de 600 à 2000 ou un mélange de tels polyétherpolyols et/ou polyesterpolyols,
   (B) un polyisocyanate ou un mélange de polyisocyanates et
   (C) un composé, qui contient dans la molécule un groupe hydroxyle et au moins un groupe cétimine ou un mélange de tels composés,
   l'additif pouvant être obtenu en ce que les composants (A), (B), et (C) réagissent ensemble dans un rapport des ingrédients tel qu'à un équivalent en groupes isocyanates correspondent 0,75 à 1,5 équivalents en groupes hydroxyles.

6. Procédé selon la revendication 5, caractérisé en ce que l'on fait réagir ensemble en tant que composant (A) un polyétherdiol ou un polyesterdiol ou un mélange de polyétherdiols et/ou de polyesterdiols et en tant que composant (B) un diisocyanate ou un mélange de diisocyanates.

7. Procédé selon la revendication 5 ou la revendication 6, caractérisé en ce que l'on fait réagir ensemble les composants (A), (B) et (C) dans un rapport des ingrédients tel qu'à un équivalent en groupes isocyanates correspondent 0,9 à 1,1, de préférence 1,0 équivalents en groupes hydroxyles.

8. Additif renfermant des groupes uréthanes, caractérisé en ce que l'on peut l'obtenir conformément à un procédé selon l'une quelconque des revendications 5 à 7.